(19) Europäisches Patentamt
European Patent Office
Office européen des brevets

(11) EP 4 566 838 A1

(12) EUROPEAN PATENT APPLICATION

(43) Date of publication:
**11.06.2025 Bulletin 2025/24**

(21) Application number: **24212259.6**

(22) Date of filing: **12.11.2024**

(51) International Patent Classification (IPC):
***B60C 1/00*** $^{(2006.01)}$ ***C08C 19/02*** $^{(2006.01)}$
***C08L 7/00*** $^{(2006.01)}$ ***C08L 9/00*** $^{(2006.01)}$

(52) Cooperative Patent Classification (CPC):
(C-Sets available)
**C08L 7/00; B60C 1/0016; C08C 19/02; C08L 9/00**
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.12.2023 JP 2023205408**

(71) Applicant: **Sumitomo Rubber Industries, Ltd.**
**Kobe-shi, Hyogo 651-0072 (JP)**

(72) Inventor: **SUGAHARA, Kazuchika**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) Provided is a tire having excellent handling stability after degradation. The tire includes a tire component that includes a rubber composition, the rubber composition having a rate of change ΔEB in elongation at break between before and after heat aging of 8.0% or lower, the tire having a product (ΔEB × Tt) of the ΔEB (%) and a thickness Tt (mm) of the tire component of less than 30.

EP 4 566 838 A1

(52) Cooperative Patent Classification (CPC): (Cont.)

C-Sets
**C08L 7/00, C08L 9/00, C08L 15/00, C08K 3/04, C08K 3/06;**
**C08L 9/00, C08L 7/00, C08L 15/00, C08K 3/04, C08K 3/06**

## Description

TECHNICAL FIELD

The present invention relates to tires.

BACKGROUND ART

From the perspective of recent environmental considerations, tires are requested to be able to maintain various performances for a long time.

SUMMARY OF INVENTION

TECHNICAL PROBLEM

Long-term maintenance of handling stability is especially required in terms of safety.
The present invention aims to solve the problem and provide a tire having excellent handling stability after degradation.

SOLUTION TO PROBLEM

The present invention relates to a tire, including a tire component that includes a rubber composition,

the rubber composition having a rate of change ΔEB in elongation at break between before and after heat aging of 8.0% or lower,
the tire having a product (ΔEB × Tt) of the ΔEB (%) and a thickness Tt (mm) of the tire component of less than 30.

ADVANTAGEOUS EFFECTS OF INVENTION

The present invention provides a tire including a tire component that includes a rubber composition, the rubber composition having a rate of change ΔEB in elongation at break between before and after heat aging of 8.0% or lower, the tire having a product (ΔEB × Tt) of the ΔEB (%) and a thickness Tt (mm) of the tire component of less than 30. Such a tire can maintain excellent handling stability after degradation.

BRIEF DESCRIPTION OF DRAWINGS

FIG. 1 is a cross-sectional view showing a part of a pneumatic tire.
FIG. 2 is an enlarged cross-sectional view showing a tread and its vicinity of the tire in FIG. 1.

DESCRIPTION OF EMBODIMENTS

The tire includes a tire component that includes a rubber composition. The rubber composition has a rate of change ΔEB in elongation at break between before and after heat aging of 8.0% or lower. Further, the tire has a product (ΔEB × Tt) of the ΔEB (%) and a thickness Tt (mm) of the tire component of less than 30.
The reason for the advantageous effect of the tire described above is not exactly clear, but it is presumably as follows.
A decrease in handling stability caused by degradation of the rubber can be reduced by controlling the rate of change ΔEB in elongation at break between before and after heat aging to be 8.0% or lower, thereby reducing a decrease in the elongation at break after degradation.
Further, a decrease in handling stability can be reduced by controlling a product (ΔEB × Tt) of the rate of change in elongation at break between before and after heat aging and the thickness of the tire component to be less than 30 to decrease the absolute value of change in elongation of the rubber caused by degradation.
The above-described mechanisms synergistically reduce a decrease in handling stability, presumably whereby handling stability after degradation may improve.
As discussed above, the tire solves the problem (aim) in improving handling stability after degradation due to the structure satisfying the relationships "ΔEB is 8.0% or lower" and "a product of ΔEB × Tt is less than 30". In other words, the

parameters of the relationships "ΔEB is 8.0% or lower" and "a product of ΔEB × Tt is less than 30" do not define the problem (aim). The problem herein is to improve handling stability after degradation. In order to solve the problem, the tire has been formulated to satisfy the parameters.

The tire includes a tire component including a rubber composition.

The rubber composition (vulcanized rubber composition) has a rate of change ΔEB in elongation at break between before and after heat aging of 8.0% or lower.

The ΔEB is preferably 7.3% or lower, more preferably 7.0% or lower, still more preferably 6.8% or lower, further preferably 6.4% or lower, further preferably 6.3% or lower, still further preferably 5.8% or lower, particularly preferably 5.2% or lower. The ΔEB is desirably as low as possible, in other words, desirably 0.0%. The lower limit is not limited.

The rubber composition (vulcanized rubber composition) has an elongation at break before heat aging (EBf) of preferably 400% or more, more preferably 500% or more, still more preferably 540% or more, further preferably 560% or more, further preferably 581% or more, further preferably 589% or more. The upper limit is preferably 730% or less, more preferably 656% or less, still more preferably 650% or less, further preferably 647% or less, further preferably 644% or less, further preferably 623% or less, further preferably 612% or less, particularly preferably 611% or less. When the EBf is within the range indicated above, the advantageous effect tends to be suitably achieved.

Herein, the values of elongation at break before and after heat aging are measured in accordance with JIS K 6251.

The rate of change ΔEB (%) in elongation at break is determined from the elongation at break EBf (%) of a sample before heat aging and the elongation at break EBa (%) of the sample after heat aging at 80°C for 168 hours using the following equation:

$$\Delta EB\ (\%) = (|EBf - EBa|)/EBf \times 100.$$

The rubber composition contains a rubber component.

The rubber component contributes to cross-linking and generally corresponds to a polymer component which has a weight average molecular weight (Mw) of 10000 or more and which is not extractable with acetone. The rubber component is solid at room temperature (25°C).

The weight average molecular weight of the rubber component is preferably 50000 or more, more preferably 150000 or more, still more preferably 200000 or more, particularly preferably 270000 or more, while it is preferably 2000000 or less, more preferably 1500000 or less, still more preferably 1000000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKgel SuperMultipore HZ-M available from Tosoh Corporation) and the determined values are calibrated with polystyrene standards.

The rubber component usable in the rubber composition may be either an unmodified rubber or a modified rubber.

The modified rubber may be a rubber having a functional group interactive with fillers such as silica. Examples include a chain end-modified rubber obtained by modifying at least one chain end of a rubber with a compound (modifier) having the above functional group (i.e., a chain end-modified rubber terminated with the functional group); a backbone-modified rubber having the functional group in the backbone; a backbone- and chain end-modified rubber having the functional group in both the backbone and a chain end (e.g., a backbone- and chain end-modified rubber in which the backbone has the functional group and at least one chain end is modified with the modifier); and a chain end-modified rubber into which a hydroxy or epoxy group has been introduced by modification (coupling) with a polyfunctional compound having two or more epoxy groups in the molecule.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of the rubber component include diene-based rubbers.

Examples of diene-based rubbers include an isoprene-based rubber, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Examples of the rubber component also include butyl-based rubbers and fluororubbers. Each of these may be used alone, or two or more of these may be used in combination. Modified or hydrogenated products of these rubber components are also usable. Extended rubbers extended with oils,

resins, liquid rubber components, etc. are usable as well. To better achieve the advantageous effect, the diene-based rubbers desirably include at least one selected from the group consisting of an isoprene-based rubber, BR, and SBR, more preferably include an isoprene-based rubber, BR, and SBR.

The mechanism of the enhancement of the advantageous effect provided by the use of diene-based rubbers including an isoprene-based rubber, BR, and SBR is not clear. Presumably, the presence of these diene-based rubbers can reinforce the rubber through cross-linking, whereby a certain level or higher handling stability can be reliably obtained. Thus, presumably, handling stability after degradation may improve.

Examples of the isoprene-based rubber include natural rubbers (NR), polyisoprene rubbers (IR), refined NR, modified NR, and modified IR. Examples of NR include those commonly used in the rubber industry such as SIR20, RSS#3, and TSR20. Any IR may be used, including those commonly used in the rubber industry such as IR2200. Examples of refined NR include deproteinized natural rubbers (DPNR) and highly purified natural rubbers. Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. Each of these may be used alone, or two or more of these may be used in combination.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, the BR preferably includes high-cis BR having a cis content of 90% by mass or higher. The cis content is more preferably 95% by mass or higher. Here, the cis content can be measured by infrared absorption spectrometry.

When one type of BR is used, the cis content of the BR refers to the cis content of the one BR, while when multiple types of BR are used, it refers to the average cis content.

The average cis content of the BR can be calculated using the formula: {Σ(amount of each BR × cis content of the each BR)}/amount of total BR. For example, when 100% by mass of rubber components include 20% by mass of BR having a cis content of 90% by mass and 10% by mass of BR having a cis content of 40% by mass, the average cis content of the BR is 73.3% by mass (= (20 × 90 + 10 × 40)/(20 + 10)).

The BR may be either unmodified or modified BR. Examples of the modified BR include those into which the functional groups listed for the modified rubbers have been introduced. The BR may also be hydrogenated polybutadiene polymers (hydrogenated BR).

Any SBR may be used. Examples include emulsion-polymerized styrene-butadiene rubbers (E-SBR) and solution-polymerized styrene-butadiene rubbers (S-SBR). Each of these may be used alone, or two or more of these may be used in combination.

The styrene content of the SBR is preferably 5% by mass or higher, more preferably 20% by mass or higher, still more preferably 25% by mass or higher, further preferably 30% by mass or higher. The styrene content is preferably 60% by mass or lower, more preferably 40% by mass or lower, still more preferably 35% by mass or lower. When the styrene content is within the range indicated above, the advantageous effect tends to be better achieved.

Herein, the styrene content can be measured by $^1$H-NMR analysis.

When one type of SBR is used, the styrene content of the SBR refers to the styrene content of the one SBR, while when multiple types of SBR are used, it refers to the average styrene content.

The average styrene content of the SBR can be calculated using the formula: {Σ(amount of each SBR × styrene content of the each SBR)}/amount of total SBR. For example, when 100% by mass of rubber components include 85% by mass of SBR having a styrene content of 40% by mass and 5% by mass of SBR having a styrene content of 25% by mass, the average styrene content of the SBR is 39.2% by mass (= (85 × 40 + 5 × 25)/(85 + 5)) .

The vinyl bond content of the SBR is preferably 3% by mass or higher, more preferably 5% by mass or higher, still more preferably 7% by mass or higher. The vinyl bond content is preferably 50% by mass or lower, more preferably 40% by mass or lower, still more preferably 30% by mass or lower. When the vinyl bond content is within the range indicated above, the advantageous effect tends to be better achieved.

Herein, the vinyl bond content (1,2-butadiene unit content) can be measured by infrared absorption spectrometry.

The vinyl content (1,2-butadiene unit content) of the SBR refers to the vinyl bond content (unit: % by mass) based on the total mass of the butadiene moieties in the SBR taken as 100. The sum of the vinyl content (% by mass), the cis content (% by mass), and the trans content (% by mass) equals 100 (% by mass). When one type of SBR is used, the vinyl content of the SBR refers to the vinyl content of the one SBR, while when multiple types of SBR are used, it refers to the average vinyl content.

The average vinyl content of the SBR can be calculated using the formula: Σ{amount of each SBR × (100 (% by mass) - styrene content (% by mass) of the each SBR) × vinyl content (% by mass) of the each SBR}/Σ{amount of each SBR × (100 (% by mass) - styrene content (% by mass) of the each SBR)}. For example, when 100 parts by mass of rubber components include 75 parts by mass of SBR having a styrene content of 40% by mass and a vinyl content of 30% by mass, 15 parts by mass of SBR having a styrene content of 25% by mass and a vinyl content of 20% by mass, and the remaining

10 parts by mass of a rubber component other than SBR, the average vinyl content of the SBR is 28% by mass (= {75 × (100 (% by mass) - 40 (% by mass)) × 30 (% by mass) + 15 × (100 (% by mass) - 25 (% by mass)) × 20 (% by mass)}/{75 × (100 (% by mass) - 40 (% by mass)) + 15 × (100 (% by mass) - 25 (% by mass))}.

The SBR may be either unmodified or modified SBR. Examples of the modified SBR include those into which the functional groups listed for the modified rubbers have been introduced. The SBR may also be hydrogenated styrene-butadiene copolymers (hydrogenated SBR).

For example, the rubber component may suitably be an ethylene unit-containing polymer (a structural unit including ethylene: $-CH_2-CH_2-$).

The ethylene unit-containing polymer is a high molecular weight ethylene unit-containing polymer that is not extracted with an organic solvent such as acetone from a vulcanized rubber composition and is used as a rubber component. The high molecular weight ethylene unit-containing polymer desirably has the weight average molecular weight of the rubber component described above.

The ethylene unit-containing polymer may be any polymer that contains an ethylene unit. To better achieve the advantageous effect, the polymer is desirably a multi-component copolymer containing an ethylene unit, a conjugated diene unit, and an aromatic vinyl unit.

The conjugated diene unit in the multi-component copolymer is a structural unit derived from a conjugated diene compound.

Examples of the conjugated diene compound include 1,3-butadiene, isoprene, 1,3-pentadiene, 2,3-dimethylbutadiene, 2-phenyl-1,3-butadiene, and 1,3-hexadiene. Each of these may be used alone, or two or more of these may be used in combination. Preferred are 1,3-butadiene and isoprene, with 1,3-butadiene being more preferred.

The aromatic vinyl unit in the multi-component copolymer is a structural unit derived from an aromatic vinyl compound.

Examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene. Each of these may be used alone, or two or more of these may be used in combination. Preferred are styrene and α-methylstyrene, with styrene being more preferred.

For example, the multi-component copolymer may be prepared by copolymerizing ethylene, a conjugated diene compound, and an aromatic vinyl compound, or by copolymerizing a combination of a conjugated diene compound and an aromatic vinyl compound or a combination of ethylene, a conjugated diene compound, and an aromatic vinyl compound, and then hydrogenating the copolymer to convert some conjugated diene units to non-conjugated olefin units. In other words, the multi-component copolymer may be a copolymer of ethylene, a conjugated diene compound, and an aromatic vinyl compound, or may be a hydrogenated product (hydrogenated copolymer) of a copolymer of a conjugated diene compound and an aromatic vinyl compound or a copolymer of ethylene, a conjugated diene compound, and an aromatic vinyl compound. Each of these may be used alone, or two or more of these may be used in combination. Of these, to better achieve the advantageous effect, the multi-component copolymer is preferably a hydrogenated product of a copolymer of a conjugated diene compound and an aromatic vinyl compound, more preferably a hydrogenated styrene-butadiene copolymer.

The multi-component copolymer may be prepared by any polymerization method such as random polymerization or block polymerization, preferably by random polymerization.

When the multi-component copolymer is a hydrogenated copolymer, the hydrogenation may be performed by any method under any reaction condition, including known methods and known conditions. Usually, the hydrogenation is performed at 20°C to 150°C under a hydrogen pressure of 0.1 to 10 MPa in the presence of a hydrogenation catalyst. Other methods and conditions related to production processes are not limited either. For example, those described in WO 2016/039005 may be used.

The amount of an isoprene-based rubber based on 100% by mass of the rubber component in the rubber composition is preferably 10% by mass or more, more preferably 30% by mass or more, still more preferably 40% by mass or more, while it is preferably 80% by mass or less, more preferably 60% by mass or less, still more preferably 50% by mass or less. When the amount is within the range indicated above, the advantageous effect tends to be suitably achieved.

The amount of BR based on 100% by mass of the rubber component in the rubber composition is preferably 10% by mass or more, more preferably 30% by mass or more, still more preferably 40% by mass or more, while it is preferably 80% by mass or less, more preferably 60% by mass or less, still more preferably 50% by mass or less. When the amount is within the range indicated above, the advantageous effect tends to be suitably achieved.

The amount of SBR based on 100% by mass of the rubber component in the rubber composition is preferably less than 80% by mass, more preferably 50% by mass or less, still more preferably 20% by mass or less. The amount of SBR is preferably 5% by mass or more, more preferably 10% by mass or more, still more preferably 15% by mass or more. When the amount is within the range indicated above, the advantageous effect tends to be suitably achieved.

The amount of SBR includes the amount of hydrogenated SBR.

The mechanism of the enhancement of the advantageous effect provided by the presence of less than 80% by

mass of SBR is not clear. Presumably, controlling the amount of SBR to be a predetermined amount or less can reduce heat generation of the rubber, whereby progress of the degradation due to heat can be suppressed. Thus, presumably, handling stability after degradation may improve.

The amount of the ethylene unit-containing polymer based on 100% by mass of the rubber component in the rubber composition is preferably less than 80% by mass, more preferably 50% by mass or less, still more preferably 20% by mass or less. The amount of the polymer is preferably 5% by mass or more, more preferably 10% by mass or more, still more preferably 15% by mass or more. When the amount is within the range indicated above, the advantageous effect tends to be suitably achieved.

The amounts of hydrogenated products of the copolymers of a conjugated diene compound and an aromatic vinyl compound and the amounts of the hydrogenated styrene-butadiene copolymers are also desirably within the range indicated above.

The materials (monomers) of synthetic rubbers such as SBR and BR may be derived from petroleum or may be recycled from rubber products such as tires or non-rubber products such as polystyrene. Non-limiting examples of monomers obtained by recycle (recycled monomers) include butadiene derived from recycled materials and aromatic vinyls derived from recycled materials. Examples of the butadiene include 1,2-butadiene and 1,3-butadiene. Non-limiting examples of the aromatic vinyls include styrene. Of these, butadiene derived from recycled materials (recycled butadiene) and/or styrene derived from recycled materials (recycled styrene) are/is preferably used as a raw material.

The recycled monomers may be produced by any method. For example, a recycled monomer may be synthesized from naphtha derived from a recycled material obtained by decomposing a rubber product such as a tire. The naphtha derived from a recycled material may be produced by any method, for example, by decomposing a rubber product such as a tire at a high temperature and a high pressure, by microwave decomposition, or by mechanical grinding and subsequent extraction.

The raw materials (monomers) of a synthetic rubber such as SBR or BR may be derived from biomass. Non-limiting examples of biomass-derived monomers (biomass monomers) include biomass-derived butadiene and biomass-derived aromatic vinyls. Examples of the butadiene include 1,2-butadiene and 1,3-bitadiene. Examples of the aromatic vinyls include styrene. Biomass monomers may be produced by any method, for example, a method including at least one of biological conversion, chemical conversion, or physical conversion of an animal or a plant. The biological conversion is typically fermentation by microorganisms. The chemical and/or physical conversion can be caused by, for example, a catalyst, a high temperature, a high pressure, electromagnetic waves, a critical liquid, or a combination of these. Examples of the biomass resources of the monomers include sugar, wood, plant residues after collecting useful components, plant-derived ethanol, and biomass naphtha.

Non-limiting examples of polymers (biomass polymers) synthesized using a biomass monomer component include polybutadiene rubbers synthesized using biomass-derived butadiene and aromatic vinyl-butadiene copolymers synthesized using biomass-derived butadiene and/or a biomass-derived aromatic vinyl. Examples of the aromatic vinyl-butadiene copolymer include styrene-butadiene rubber synthesized using biomass-derived butadiene and/or a biomass-derived styrene.

Whether the material of a polymer is derived from biomass can be judged by the percent Modern Carbon (pMC) measured in accordance with ASTM D6866-10.

The term "pMC" refers to the ratio of the $^{14}C$ content of a sample to the $^{14}C$ content of a modern carbon standard (modern standard reference). This value is used as an index indicative of the biomass ratio of a compound (rubber). The following will describe what this value means.

One mole of carbon atoms ($6.02 \times 10^{23}$ carbon atoms) includes about $6.02 \times 10^{11}$ $^{14}C$ atoms (about one trillionth of the number of normal carbon atoms). $^{14}C$ is called a radioactive isotope and its half-life period is 5730 years and the number thereof regularly decreases. Decay of all the $^{14}C$ atoms requires 226000 years. This means that in the fossil fuels, such as coal, petroleum, and natural gas, which are considered to be left for at least 226000 years after carbon dioxide and the like in the air were taken into and fixed in plants, etc., all the $^{14}C$ atoms which had been contained in the plants etc. at the beginning of the fixation were decayed. Therefore, in the current 21st century, the fossil fuels, such as coal, petroleum, and natural gas, contain no $^{14}C$ atoms. Thus, chemical materials prepared from such fossil fuel raw materials contain no $^{14}C$ atoms either.

Meanwhile, $^{14}C$ is unceasingly generated by nuclear reaction of cosmic rays in the air, and this generation balances with the $^{14}C$ reduction due to radioactive decay. Thus, in the global atmosphere, the amount of $^{14}C$ is constant. Then, the $^{14}C$ content of materials derived from biomass resources which are circulating in the current environment is about $1 \times 10^{-12}$ mol% of the total of C atoms as described above. Therefore, a difference in the values can be used to calculate the percentages (biomass ratios) of compounds derived from natural resources (compounds derived from biomass resources) in a compound (rubber).

The amount of $^{14}C$ is generally determined as follows. $^{13}C$ content ($^{13}C/^{12}C$) and $^{14}C$ content ($^{14}C/^{12}C$) are determined by tandem accelerator-based mass spectrometry. In the determination, the $^{14}C$ content of the natural carbon cycle at 1950 is used as a modern standard reference, that is, a standard $^{14}C$ content. The particular standard substance

used is an oxalic acid standard offered by the National Institute of Standards and Technology (NIST), United States. The specific radioactivity of carbon (intensity of radioactivity of $^{14}C$ per gram of carbon) in the oxalic acid is corrected for carbon isotopic fractionation to a certain value for $^{13}C$, and is then corrected for decay between 1950 AD and the measurement date. This corrected value is taken as the standard $^{14}C$ content (100%). The ratio between this value and the actual measurement value of a sample is defined as pMC.

Thus, a rubber 100% produced from materials derived from biomass (natural materials) is expected to have about 110 pMC although there are some differences such as regional differences (currently, such materials often fail to exhibit a value of 100 in usual conditions). On the other hand, the measured $^{14}C$ content of chemical materials derived from fossil fuels, such as petroleum, is expected to be substantially 0 pMC (for example, 0.3 pMC). This value corresponds to a biomass ratio of 0% mentioned above.

Based on the above discussion, materials such as rubber with a high pMC, i.e., materials such as rubber with a high biomass ratio can suitably be used in rubber compositions for environmental protection.

The rubber composition desirably contains a filler.

Any filler may be used, including materials known in the rubber field. Examples include inorganic fillers such as carbon black, silica, calcium carbonate, talc, alumina, clay, aluminum hydroxide, aluminum oxide, and mica; bio char, and hard-to-disperse fillers. To better achieve the advantageous effect, carbon-derived fillers (carbon-containing fillers) such as carbon black and silica are preferred, and carbon black is more preferred among these.

The amount of a filler (total amount of fillers such as silica and carbon black) per 100 parts by mass of the rubber component in the rubber composition is preferably 30 parts by mass or more, more preferably 50 parts by mass or more, still more preferably 55 parts by mass or more, further preferably 60 parts by mass or more, while it is preferably 200 parts by mass or less, more preferably 150 parts by mass or less, still more preferably 100 parts by mass or less. When the amount is within the range indicated above, the advantageous effect tends to be better achieved.

Any carbon black may be used in the rubber composition, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. Each of these may be used alone, or two or more of these may be used in combination. In addition to the conventional carbon black made from mineral oils, etc., carbon black made from biomass materials such as lignin is also usable. Moreover, the carbon black may be appropriately replaced with an equivalent amount of recycled carbon black produced by decomposing rubber or plastic products containing carbon black, such as tires.

The nitrogen adsorption specific surface area ($N_2SA$) of the carbon black is preferably 5 $m^2/g$ or more, more preferably 10 $m^2/g$ or more, still more preferably 15 $m^2/g$ or more, further preferably 42 $m^2/g$ or more, still further preferably 45 $m^2/g$ or more. The $N_2SA$ is preferably 100 $m^2/g$ or less, more preferably 80 $m^2/g$ or less, still more preferably 60 $m^2/g$ or less. When the $N_2SA$ is within the range indicated above, the advantageous effect tends to be better achieved.

The nitrogen adsorption specific surface area of the carbon black can be measured in accordance with JIS K 6217-2:2001.

To better achieve the advantageous effect and from the perspective of environmental considerations, recycled carbon black may suitably be used as the carbon black. Recycled carbon black may be used alone or in combination of two or more kinds thereof.

The mechanism of the enhancement of the advantageous effect provided by the presence of recycled carbon black is not clear. Presumably, the $\Delta EB$ can be controlled to be 8.0% or less and the product of $\Delta EB \times Tt$ can be controlled to be less than 30 when using recycled carbon black as well. The use of recycled carbon black can lead to excellent handling stability after degradation and is also desirable from the perspective of environmental considerations. Thus, presumably, handling stability after degradation may improve while being environmentally friendly.

Herein, the term "recycled carbon black" refers to carbon black recovered from a used rubber product such as a waste tire through pyrolysis.

Examples of the recycled carbon black include recycled carbon black generated through pyrolysis of waste tires. Pyrolysis of waste tires may be performed by a known method, for example, by pyrolysis at a temperature of 650°C or higher.

The average primary particle size of recycled carbon black is usually 10 nm or more and 100 nm or less. The lower limit is preferably 12 nm or more, more preferably 15 nm or more. The upper limit is preferably 90 nm or less, more preferably 80 nm or less.

The average primary particle size of carbon black can be determined by measuring the particle sizes of at least 400 primary particles of the carbon black observed in the visual field of a transmission or scanning electron microscope and averaging the measured particle sizes.

The recycled carbon black may be a commercial product, and examples thereof include PB365 (trade name) available from Enrestec. The PB365 is recycled carbon black generated through pyrolysis of waste tires and has $N_2SA$ of 76 $m^2/g$. The PB365 has an ash content of about 17% by mass.

The amount of carbon black (total amount of recycled carbon black and other carbon black) per 100 parts by mass

of the rubber component in the rubber composition is preferably 30 parts by mass or more, more preferably 50 parts by mass or more, still more preferably 55 parts by mass or more, further preferably 60 parts by mass or more, while it is preferably 200 parts by mass or less, more preferably 150 parts by mass or less, still more preferably 100 parts by mass or less. When the amount is within the range indicated above, the advantageous effect tends to be better achieved.

The amount of recycled carbon black per 100 parts by mass of the rubber component in the rubber composition is preferably 30 parts by mass or more, more preferably 50 parts by mass or more, still more preferably 55 parts by mass or more, further preferably 60 parts by mass or more, while it is preferably 200 parts by mass or less, more preferably 150 parts by mass or less, still more preferably 100 parts by mass or less. When the amount is within the range indicated above, the advantageous effect tends to be better achieved.

Non-limiting examples of silica usable in the rubber composition include silica usually used in the tire industry, such as silica (anhydrous silica) prepared by a dry process and silica (hydrous silica) prepared by a wet process. The raw material of the silica is not limited and may be a raw material derived from minerals such as quartz or a raw material derived from a biological resource such as husks (for example, silica made from a biomass material such as husks). The silica may be silica recycled from a silica-containing product. Preferred among these are hydrous silica prepared by a wet process because it has a large number of silanol groups. The silica may be used alone or two or more types of the silica may be used in combination.

The silica made from a biomass material can be obtained by, for example, extracting a silicate using a sodium hydroxide solution from husk ash that is obtained by burning husks, subsequently, as in production of conventional wet silica, reacting the silicate with sulfuric acid to precipitate silicon dioxide, and then subjecting the precipitated silicon dioxide to filtration, water washing, drying, and grinding.

The silica recycled from a silica-containing product may be silica recovered from a silica-containing product such as an electronic component of a semiconductor, a tire, a drying agent, or a filtering material such as diatomite. Non-limiting examples of the recovering method include thermal decomposition and decomposition by electromagnetic waves. Preferred among these is silica recovered from an electronic component of a semiconductor or a tire.

Since crystalline silica does not dissolve in water, silicic acid as a component thereof cannot be utilized. Crystallization of silica in husk ash can be suppressed by controlling the burning temperature and burning time (see JP 2009-2594 A, Akita Prefectural University Web Journal B/2019, vol.6, pp.216-222, etc.).

Amorphous silica extracted from husks may be commercially available from Wilmar, etc.

The amount of silica, if present, in the rubber composition per 100 parts by mass of the rubber component is preferably 30 parts by mass or more, more preferably 55 parts by mass or more, still more preferably 60 parts by mass or more, while it is preferably 200 parts by mass or less, more preferably 150 parts by mass or less, still more preferably 100 parts by mass or less. When the amount is within the range indicated above, the advantageous effect tends to be better achieved.

The nitrogen adsorption specific surface area ($N_2SA$) of the silica is preferably 50 $m^2/g$ or more, more preferably 100 $m^2/g$ or more, still more preferably 150 $m^2/g$ or more. The upper limit of the $N_2SA$ of the silica is not limited, and it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

Examples of hard-to-disperse fillers include microfibrillated plant fibers, short fibrous celluloses, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, the term "cellulose microfibrils" typically refers to cellulose fibers having an average fiber diameter of not more than 10 $\mu$m, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter indicated above.

The amount of hard-to-disperse fillers, if present, in the rubber composition per 100 parts by mass of the rubber component is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The rubber composition containing silica preferably further contains a silane coupling agent.

Any silane coupling agent may be used, and those known in the rubber field are usable. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. Each of these may be used alone, or two or more of these may be used in combination.

The amount of silane coupling agents per 100 parts by mass of the silica in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The rubber composition desirably contains a plasticizer.

Herein, the term "plasticizer" refers to a material that can impart plasticity to rubber components. It may be either liquid or solid at room temperature (25°C). Each plasticizer may be used alone, or two or more plasticizers may be used in combination.

Examples of the plasticizer include oils, liquid polymers, and resins. Each of these may be used alone, or two or more of these may be used in combination.

Non-limiting examples of the oils include conventional oils, including process oils such as paraffinic process oils, aromatic process oils, and naphthenic process oils, low polycyclic aromatic (PCA) process oils such as TDAE and MES, plant-derived oils, and mixtures thereof. Each of these may be used alone, or two or more of these may be used in combination. From the standpoint of life cycle analysis, lubricating oils after being used in mixers for mixing rubber, automobile engines, etc. or waste cooking oil may be appropriately used.

To better achieve the advantageous effect, a plant-derived oil (also referred to as plant oil) is desirable among these.

The mechanism of the enhancement of the advantageous effect provided by the use of a plant oil is not clear. Presumably, the presence of a plant oil reduces aggregation of fillers, thereby reducing a decrease in elongation at break caused by degradation. Thus, presumably, handling stability after degradation may improve.

Examples of the plant-derived oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil.

Examples of the oil also include commercial products available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., Nisshin Oillio Group, etc.

Examples of the liquid polymers include liquid diene polymers (liquid rubbers) and liquid farnesene polymers, all of that are liquid at 25°C. Examples of liquid rubbers include liquid styrene-butadiene copolymers (liquid SBR), liquid butadiene polymers (liquid BR), liquid isoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). A chain end or the backbone of these may be modified with a polar group. Hydrogenated products of these are also usable.

The weight average molecular weight (Mw) of the liquid diene polymers is preferably $1.0 \times 10^3$ to $5.0 \times 10^4$, more preferably $3.0 \times 10^3$ to $1.5 \times 10^4$ as measured by gel permeation chromatography (GPC) and calibrated with polystyrene standards. The lower limit of the Mw of the liquid diene polymers may be 4500 or 8500, and the upper limit may be 4500 or 8500.

Herein, the Mw of the liquid diene polymers is measured by gel permeation chromatography (GPC) and calibrated with polystyrene standards.

Usable liquid diene polymers may be commercially available from Sartomer, Kraray, etc.

The resins may be resins which are usually used as additives for tires. They may be either liquid or solid at room temperature (25°C). Examples include aromatic vinyl polymers, coumarone-indene resins, coumarone resins, indene resins, phenol resins, rosin resins, petroleum resins, terpene resins, and acrylic resins. The resins may be those hydrogenated (hydrogenated resins). Each of these may be used alone, or two or more of these may be used in combination. The resins themselves may be copolymers of different monomers. Aromatic vinyl polymers, petroleum

resins, terpene resins, and hydrogenated products of these polymers and resins are desirable, and petroleum resins and hydrogenated resins thereof are more desirable among these.

The softening point of the resins that are solid at room temperature, if used, is preferably 50°C or higher, more preferably 55°C or higher, still more preferably 60°C or higher, particularly preferably 85°C or higher, while it is preferably 160°C or lower, more preferably 150°C or lower, still more preferably 140°C or lower, further preferably 100°C or lower, particularly preferably 94°C or lower. When the softening point is within the range indicated above, the advantageous effect tends to be better achieved.

The softening point of the resins that are liquid at room temperature is preferably 20°C or lower, 10°C or lower, or 0°C or lower.

Hydrogenated resins desirably have a softening point within the range indicated above.

The softening point of the resins is determined in accordance with JIS K 6220-1:2001 using a ring and ball softening point measuring apparatus. The temperature at which the ball drops down is defined as the softening point.

The aromatic vinyl polymers refer to polymers containing aromatic vinyl monomers as structural units. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, α-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, C9/DCPD resins, and hydrogenated products of these resins. DCPD resins, hydrogenated DCPD resins, C9/DCPD resins, and C9/hydrogenated DCPD resins are preferred among these.

The terpene resins refer to polymers containing terpene as structural units. Examples include polyterpene resins produced by polymerizing terpene compounds and aromatic modified terpene resins produced by polymerizing terpene compounds and aromatic compounds. Examples of usable aromatic modified terpene resins include terpene-phenol resins made from the terpene compounds and phenolic compounds, terpene-styrene resins made from the terpene compounds and styrene compounds, and terpene-phenol-styrene resins made from the terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds such as styrene and α-methylstyrene. Aromatic modified terpene resins are preferred among these.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitably usable among these.

The resins may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, ExxonMobil, KRATON, Nitto Chemical Co., Ltd., Nippon Shokubai Co., Ltd., ENEOS Corporation, Arakawa Chemical Industries, Ltd., Taoka Chemical Co., Ltd., etc.

Desirable plasticizers in view of sustainability are plant-derived plasticizers such as the plant-derived oils and farnesene polymers.

The term "farnesene polymer" refers to a polymer that is produced by polymerizing farnesene and contains a farnesene-based structural unit. Farnesene has isomers such as α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

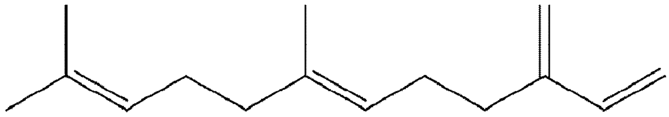

.

The farnesene polymers may be either homopolymers of farnesene (farnesene homopolymers) or copolymers of farnesene and vinyl monomers (farnesene-vinyl monomer copolymers). Each of these may be used alone, or two or more of these may be used in combination. Copolymers of farnesene and vinyl monomers are preferred among these.

Examples of the vinyl monomers include aromatic vinyl compounds such as styrene, 2-methylstyrene, 3-methylstyrene, 4-methylstyrene, $\alpha$-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes, and conjugated diene compounds such as butadiene and isoprene. Each of these may be used alone, or two or more of these may be used in combination. Butadiene is preferred among these. In other words, copolymers of farnesene and butadiene (farnesene-butadiene copolymers) are preferred among the farnesene-vinyl monomer copolymers.

The copolymerization ratio of farnesene and vinyl monomers (farnesene/vinyl monomers) of the farnesene-vinyl monomer copolymers is preferably 40/60 to 90/10 by mass.

Farnesene polymers having a weight average molecular weight (Mw) of 3000 to 300000 may be suitably used. The Mw of the farnesene polymers is preferably 8000 or more, more preferably 10000 or more, while it is preferably 100000 or less, more preferably 60000 or less, still more preferably 50000 or less. When the weight average molecular weight is within the range indicated above, the advantageous effect tends to be better achieved.

Farnesene polymers which are either liquid or solid at room temperature (25°C) may be used. Of these, liquid farnesene polymers that are liquid at room temperature (25°C) are desirable.

The amount of a plasticizer (total amount of plasticizers) per 100 parts by mass of the rubber component in the rubber composition is preferably 5 parts by mass or more, more preferably 8 parts by mass or more, still more preferably 10 parts by mass or more. The upper limit is preferably 30 parts by mass or less, more preferably 20 parts by mass or less, still more preferably 13 parts by mass or less. When the amount is within the range indicated above, the advantageous effect tends to be better achieved.

The amount of plasticizers includes the amounts of oils or resins in oil-extended rubbers or resin-extended rubbers.

The amount of a solid plasticizer that is solid at room temperature (25°C) per 100 parts by mass of the rubber component in the rubber composition is preferably 1 part by mass or more, more preferably 2 parts by mass or more, still more preferably 3 parts by mass or more. The upper limit is preferably 10 parts by mass or less, more preferably 7 parts by mass or less, still more preferably 5 parts by mass or less. When the amount is within the range indicated above, the advantageous effect tends to be better achieved.

The amounts of the resin that is solid at room temperature (25°C), the aromatic vinyl polymer that is solid at room temperature (25°C), and the petroleum resin are also desirably within the range indicated above.

The amount of a liquid plasticizer that is liquid at room temperature (25°C) per 100 parts by mass of the rubber component in the rubber composition is preferably 3 parts by mass or more, more preferably 5 parts by mass or more, still more preferably 7 parts by mass or more. The upper limit is preferably 25 parts by mass or less, more preferably 20 parts by mass or less, still more preferably 15 parts by mass or less, further preferably 10 parts by mass or less. When the amount is within the range indicated above, the advantageous effect tends to be better achieved.

The amount of the liquid plasticizer includes the amount of oils in oil-extended rubbers and the amount of liquid resins in resin-extended rubbers extended with liquid resins.

The amounts of oils that are liquid at room temperature (25°C) and the plant oil are also desirably within the range indicated above.

To better achieve the advantageous effect, the rubber composition desirably contains a double bond-containing polymer that is liquid at 25°C (hereinafter, also referred to as a double bond-containing low molecular weight polymer (a low molecular weight polymer containing a double bond)).

Herein, the double bond-containing low molecular weight polymer is not included in the rubber component or the plasticizer.

The mechanism of the enhancement of the advantageous effect provided by the presence of a double bond-containing low molecular weight polymer is not clear. Presumably, the presence of a double bond-containing liquid polymer can increase the reinforcing effect due to cross-linking, whereby a decrease in handling stability caused by degradation can be reduced. Thus, presumably, handling stability after degradation may improve.

The weight average molecular weight of the double bond-containing low molecular weight polymer is preferably 10000 or more, more preferably 30000 or more, still more preferably 50000 or more, while it is preferably 150000 or less, more preferably 120000 or less, still more preferably 90000 or less. When the weight average molecular weight is within the range indicated above, the advantageous effect tends to be better achieved.

The amount of the double bond-containing low molecular weight polymer per 100 parts by mass of the rubber component in the rubber composition is preferably 5 parts by mass or more, more preferably 8 parts by mass or more, still more preferably 10 parts by mass or more. The upper limit is preferably 50 parts by mass or less, more preferably 30 parts by mass or less, still more preferably 20 parts by mass or less. When the amount is within the range indicated above, the advantageous effect tends to be better achieved.

The double bond-containing low molecular weight polymer may be any low molecular weight polymer containing a double bond and is desirably a polyoctenamer. The polyoctenamer includes both a cyclic or liner cyclooctene-based polymer and a mixture of such a cyclic or liner polymer.

Herein, the polyoctenamer is not included in plasticizers.

To better achieve the advantageous effect, the polyoctenamer is desirably a polyoctenamer that has a melting point or a softening point of room temperature or higher and 120°C or lower.

Examples of usable polyoctenamers include VESTENAMER (registered trade mark) 8012 available from Evonik and VESTENAMER (registered trade mark) available from Evonik.

The weight average molecular weight of the polyoctenamer is preferably 10000 or more, more preferably 30000 or more, still more preferably 50000 or more, while it is preferably 150000 or less, more preferably 120000 or less, still more preferably 90000 or less. When the weight average molecular weight is within the range indicated above, the advantageous effect tends to be better achieved.

The amount of the polyoctenamer per 100 parts by mass of the rubber component in the rubber composition is preferably 5 parts by mass or more, more preferably 8 parts by mass or more, still more preferably 10 parts by mass or more. The upper limit is preferably 50 parts by mass or less, more preferably 30 parts by mass or less, still more preferably 20 parts by mass or less. When the amount is within the range indicated above, the advantageous effect tends to be better achieved.

To better achieve the advantageous effect, the rubber composition desirably contains a thermoplastic elastomer.

Herein, the thermoplastic elastomer is not included in the rubber component.

The mechanism of the enhancement of the advantageous effect provided by the presence of a thermoplastic elastomer is not clear. Presumably, the presence of a thermoplastic elastomer improves the modulus of elasticity of the rubber composition, whereby a certain level or higher handling stability can be imparted. Thus, presumably, handling stability after degradation may improve.

Examples of usable thermoplastic elastomers include olefin-based thermoplastic elastomers, styrene-based thermoplastic elastomers (e.g., styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS)), vinyl chloride-based thermoplastic elastomers, urethane-based thermoplastic elastomers, polyamide-based thermoplastic elastomers, polyester-based thermoplastic elastomers, and fluorinated thermoplastic elastomers. These may be used alone or in combination of two or more. Olefin-based thermoplastic elastomers, urethane-based thermoplastic elastomers (thermoplastic polyurethane elastomers (TPU)) are preferred among these.

Examples of thermoplastic polyurethane elastomers (urethane-based thermoplastic elastomers) include those formed from isocyanates and polyols, and optional chain extenders.

The isocyanates for forming the thermoplastic polyurethane elastomers may be any isocyanate compound having two or more isocyanate groups. Examples include aromatic isocyanates such as 2,4-toluene diisocyanate, 2,6-toluene diisocyanate, mixtures of 2,4-toluene diisocyanate and 2,6-toluene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), p-phenylene diisocyanate (PPDI), and 4,4'-methylene-bis(phenylisocyanate); and alicyclic or aliphatic isocyanates such as 4,4'-dicyclohexylmethane diisocyanate ($H_{12}MDI$), hydrogenated xylylene diisocyanate ($H_6XDI$), hexamethylene diisocyanate (HDI), and isophorone diisocyanate (IPDI). These may be used alone or in combination of two or more.

Examples of the polyols (high-molecular-weight polyols) for forming the thermoplastic polyurethane elastomers include polyether polyols such as polyoxyethylene glycol (PEG), polyoxypropylene glycol (PPG), and polyoxytetramethylene glycol (PTMG); condensed polyester polyols such as polyethylene adipate (PEA), polybutylene adipate (PBA), and polyhexamethylene adipate (PHMA); lactone-based polyester polyols such as poly-ε-caprolactone (PCL); polycarbonate polyols such as polyhexamethylene carbonate; and acrylic polyols. In view of ride quality after long-term storage, polyether polyols and polycarbonate polyols are preferred among these. These may be used alone or in combination of two or more.

Examples of the chain extenders include low-molecular-weight polyols, polyamines, and amino alcohols. In view of performance such as ride quality after long-term storage, low-molecular-weight polyols are preferred among these.

Examples of the low-molecular-weight polyols include triols such as glycerol, trimethylolethane, trimethylolpropane, and hexane triol; tetraols such as pentaerythritol; and hexaols such as sorbitol. Examples also include diols such as ethylene glycol, diethylene glycol, triethylene glycol, 1,3-propanediol, 1,3-butanediol, 1,4-butanediol, neopentyl glycol, 1,6-hexanediol, 1,8-octanediol, aniline-based diols, and bisphenol A-based diols. These may be used alone or in combination of two or more.

Examples of the polyamines include triamines such as diethylenetriamine and dipropylenetriamine; and diamines including aliphatic diamines such as ethylenediamine and hexamethylenediamine, alicyclic diamines such as isophorone diamine and piperazine, and aromatic diamines. The aromatic diamines may be, for example, monocyclic aromatic diamines in which two amino groups are bound to one aromatic ring, or polycyclic aromatic diamines having two aminophenyl groups in which at least one amino group is bound to one aromatic ring. Examples of the monocyclic aromatic diamines include those in which the amino group is directly bound to the aromatic ring, such as phenylenediamine, toluene diamine, diethyltoluene diamine, and dimethylthiotoluene diamine; and those in which the amino group is bound to the aromatic ring via a lower alkylene group, such as xylylenediamine. Examples of the polycyclic aromatic diamines include diaminodiphenyl alkanes (e.g., 4,4'-diaminodiphenylmethane and derivatives thereof). These may be used alone or in combination of two or more.

Thermoplastic polyurethane elastomers may be synthesized by known methods, including a one-shot method and a prepolymer method. The one-shot method involves reacting isocyanates with polyols and other materials all at once to obtain a high molecular weight. The prepolymer method involves reacting isocyanates with polyols and other materials in multiple steps to obtain a high molecular weight. An exemplary method involves temporarily synthesizing a low-molecular-weight urethane prepolymer and subsequently reacting the prepolymer with the above-mentioned chain extenders to obtain a high molecular weight.

The polyurethanes may be synthesized using known catalysts. Examples of catalysts include monoamines such as triethylamine and N,N-dimethylcyclohexylamine; polyamines such as N,N,N',N'-tetramethylethylenediamine; cyclic diamines such as 1,8-diazabicyclo[5.4.0]-7-undecene (DBU) and triethylenediamine; and tin catalysts such as dibutyltin dilaurate and dibutyltin diacetate. These may be used alone or in combination of two or more.

The proportions of the isocyanates and the polyols in the polyurethanes are not limited. The ratio of the isocyanate groups of the isocyanates to the hydroxy groups of the polyols, NCO/OH ratio (molar ratio), is preferably 0.5 or higher, more preferably 0.7 or higher, still more preferably 0.8 or higher. When the ratio is lower than the lower limit, the isocyanate content may be so small that the mechanical strength of the polyurethanes tends to decrease. Conversely, the NCO/OH ratio (molar ratio) is preferably 2.5 or lower, more preferably 2.2 or lower, still more preferably 2.0 or lower. When the ratio is higher than the upper limit, the isocyanate content may be excessive and lead to more absorption of moisture, potentially resulting in low mechanical strength of the polyurethanes.

The amount of the thermoplastic elastomer per 100 parts by mass of the rubber component in the rubber composition is preferably 1 part by mass or more, more preferably 3 parts by mass or more, still more preferably 5 parts by mass or more. The upper limit is preferably 20 parts by mass or less, more preferably 15 parts by mass or less, still more preferably 10 parts by mass or less. When the amount is within the range indicated above, the advantageous effect tends to be better achieved.

The amounts of olefin-based thermoplastic elastomers and thermoplastic polyurethane elastomers (TPU) are also desirably within the range indicated above.

In view of crack resistance, ozone resistance, etc., the composition preferably contains an antioxidant.

Non-limiting examples of the antioxidant include naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline antioxidants such as polymerized 2,2,4-trimethyl-1,2-dihydroquinoline; monophenolic antioxidants such as 2,6-dit-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants and quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber component in the rubber composition is preferably 0.2 parts by mass or more, more preferably 0.7 parts by mass or more, still more preferably 1.0 parts by mass or more. The amount is preferably 10.0 parts by mass or less, more preferably 6.0 parts by mass or less.

The rubber composition preferably contains stearic acid.

The amount of stearic acid per 100 parts by mass of the rubber component in the rubber composition is preferably 0.5 parts by mass or more, more preferably 2.0 parts by mass or more, still more preferably 2.5 parts by mass or more, while it is preferably 10 parts by mass or less, more preferably 5 parts by mass or less.

Here, conventionally known stearic acid may be used, including, for example, those available from NOF Corporation, Kao Corporation, FUJIFILM Wako Pure Chemical Corporation, Chiba Fatty Acid Co., Ltd., etc.

The rubber composition preferably contains zinc oxide.

The amount of zinc oxide per 100 parts by mass of the rubber component in the rubber composition is preferably 0.5 parts by mass or more, more preferably 2.0 parts by mass or more, still more preferably 3.0 parts by mass or more, while it is preferably 6.0 parts by mass or less, more preferably 4.0 parts by mass or less.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The rubber composition may contain wax.

The amount of wax per 100 parts by mass of the rubber component in the rubber composition is preferably 0.5 parts by mass or more, more preferably 1.2 parts by mass or more, while it is preferably 8.0 parts by mass or less, more preferably 5.0 parts by mass or less.

The wax is not limited. Any wax usually used in the tire industry may be suitably used. Examples include petroleum waxes, mineral waxes, synthetic waxes, and plant-derived waxes. Petroleum waxes and plant-derived waxes are preferred, with petroleum waxes being more preferred. Examples of plant-derived waxes include rice waxes, carnauba waxes, and candelilla waxes. Examples of petroleum waxes include paraffin waxes and microcrystalline waxes as well as selected special waxes thereof. Paraffin waxes are preferred. According to the present embodiments, waxes do not include stearic acid. Usable commercial products of waxes are available from Ouchi Shinko Chemical Industrial Co., Ltd., Nippon Seiro Co., Ltd., Paramelt, etc. Each of these waxes may be used alone, or two or more of these may be used in combination.

The rubber composition preferably contains sulfur in order to moderately crosslink the polymer chains to achieve good properties.

The amount of sulfur per 100 parts by mass of the rubber component in the rubber composition is preferably 1.0 parts by mass or more, more preferably 1.4 parts by mass or more, still more preferably 1.6 parts by mass or more. The amount is preferably 7.0 parts by mass or less, more preferably 5.0 parts by mass or less, still more preferably 4.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. Each of these may be used alone, or two or more of these may be used in combination.

The rubber composition preferably contains a vulcanization accelerator.

The amount of vulcanization accelerators in the rubber composition is not limited and may be freely determined according to the desired curing rate and crosslink density. Still, the amount per 100 parts by mass of the rubber component is preferably 0.3 parts by mass or more, more preferably 0.5 parts by mass or more, still more preferably 0.7 parts by mass or more. The upper limit is preferably 8.0 parts by mass or less, more preferably 5.0 parts by mass or less, still more preferably 4.0 parts by mass or less.

Any type of vulcanization accelerator may be used, including those generally used. Examples of vulcanization accelerators include benzothiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. Sulfenamide vulcanization accelerators, guanidine vulcanization accelerators, and benzothiazole vulcanization accelerators are preferred among these.

In addition to the above-described components, the rubber composition may appropriately contain agents commonly used in the tire industry such as releasing agents or other materials.

Herein, various materials containing carbon atoms (for example, rubbers, oils, resins, vulcanization accelerators, antioxidants, surfactants, etc.) may be derived from carbon dioxide in the air. The materials may be obtained from carbon dioxide by directly converting carbon dioxide or by synthesizing methane from carbon dioxide through methanation and then converting the methane.

The tire has a ratio (Cc/ΔEB) of the amount Cc (parts by mass) of carbon black per 100 parts by mass of the rubber component in the rubber composition to the rate of change ΔEB (%) in elongation at break of the rubber composition

(vulcanized rubber composition) between before and after heat aging of desirably higher than 7.6.

The ratio Cc/ΔEB is preferably 8.2 or higher, more preferably 9.4 or higher, still more preferably 9.5 or higher, further preferably 11.5 or higher, further preferably 11.6 or higher, still further preferably 13.2 or higher. The upper limit of the ratio Cc/ΔEB is preferably 18.0 or lower, more preferably 16.0 or lower, still more preferably 15.0 or lower. When the ratio (Cc/ΔEB) is within the range indicated above, the advantageous effect tends to be better achieved.

The mechanism of the enhancement of the advantageous effect provided by the ratio Cc/ΔEB of higher than 7.6 is not clear. Presumably, satisfaction of the relationship "Cc/ΔEB > 7.6" indicates that the rubber is reinforced by carbon black relative to a fixed amount of change, whereby a decrease in handling stability can be reduced. Thus, presumably, handling stability after degradation may improve.

The tire desirably has a product (Pc × ΔEB) of the amount Pc (parts by mass) of the plasticizer per 100 parts by mass of the rubber component in the rubber composition and the rate of change ΔEB (%) in elongation at break of the rubber composition (vulcanized rubber composition) between before and after heat aging of less than 80.

The product of Pc × ΔEB is preferably 70 or less, more preferably 68 or less, still more preferably 64 or less, further preferably 52 or less, still more preferably 46 or less. The lower limit of the product of Pc × ΔEB is preferably 10 or more, more preferably 20 or more, still more preferably 30 or more. When the product is within the range indicated above, the advantageous effect tends to be better achieved.

The mechanism of the enhancement of the advantageous effect provided by the product of Pc × ΔEB of less than 80 is not clear. Presumably, satisfaction of the relationship "Pc × ΔEB < 80" may lead to prevention of loss of the plasticizer caused by degradation and further lead to reduction of a change in rigidity caused by such a loss, whereby a decrease in handling stability can be reduced. Thus, presumably, handling stability after degradation may improve.

In the tire, the rubber composition (100% by mass) desirably has a plasticizer content Pr (% by mass) of 6.5% by mass or lower.

The Pr is preferably 6.0% by mass or lower, more preferably 5.5% by mass or lower, still more preferably 5.3% by mass or lower, further preferably 5.2% by mass or lower, further preferably 5.1% by mass or lower. The lower limit of the Pr is preferably 3.0% by mass or higher, more preferably 3.5% by mass or higher, still more preferably 4.0% by mass or higher. When the Pr is within the range indicated above, the advantageous effect tends to be better achieved.

The mechanism of the enhancement of the advantageous effect provided by the Pr of 6.5% by mass or lower is not clear. Presumably, the low plasticizer content may lead to prevention of loss of the plasticizer caused by degradation and further lead to reduction of a change in rigidity caused by such a loss, whereby a decrease in handling stability can be reduced. Thus, presumably, handling stability after degradation may improve.

The rubber composition may be turned into a crosslinked rubber composition by kneading the above-described components with a rubber kneading machine such as an open roll or a Banbury mixer and then subjecting the kneaded mixture to cross-linking or the like.

The kneading conditions are as follows. In a base kneading step of kneading additives other than cross-linking agents (vulcanizing agents) and vulcanization accelerators, the kneading temperature is preferably 100°C or higher, more preferably 120°C or higher, while it is preferably 180°C or lower, more preferably 170°C. In a final kneading step of kneading vulcanizing agents and vulcanization accelerators, the kneading temperature is preferably 80°C or higher, while it is preferably 120°C or lower, more preferably 110°C or lower. The composition obtained after kneading vulcanizing agents and vulcanization accelerators is usually vulcanized by press vulcanization, for example. The vulcanization temperature is preferably 140°C or higher, more preferably 150°C or higher, while it is preferably 190°C or lower, more preferably 185°C or lower.

The rubber composition is for use in a tire component.

To better achieve the advantageous effect, the tire component is desirably a tire inner component.

Herein, the term "tire inner component" refers to a component excluding a cap tread that comes in contact with roads during running.

Examples of the tire inner component include a carcass ply, a base tread, a breaker, a sidewall, a clinch apex, and a bead apex. Of these, the rubber composition is preferably for use in a sidewall.

The tire is produced using the rubber composition by usual methods. Specifically, the rubber composition containing necessary additives before vulcanization is extruded and processed into the shape of a tire component such as a tire inner component and then molded on a tire building machine by usual methods. The resulting tire component is assembled with other tire components to produce an unvulcanized tire. Then, the unvulcanized tire is heated and pressurized in a vulcanizer, whereby a tire can be produced.

Non-limiting examples of the tire include pneumatic tires, solid tires, and airless tires. Pneumatic tires are preferred among these.

The tire is suitably used as a passenger car tire, a large passenger car tire, a large SUV tire, a truck or bus tire, a motorcycle tire, a racing tire, a winter tire (studless tire, snow tire, studded tire), an all-season tire, a run-flat tire, an aircraft tire, a mining vehicle tire, etc.

The tire includes a tire component including the rubber composition.

The tire has a product (ΔEB × Tt) of the rate of change ΔEB (%) in elongation at break of the rubber composition (vulcanized rubber composition) between before and after heat aging and the thickness Tt of the tire component of less than 30.

The product of ΔEB × Tt is preferably 28 or less, more preferably 26 or less, still more preferably 25 or less, further preferably 24 or less, further preferably 22 or less, further preferably 20 or less, further preferably 18 or less, further preferably 16 or less. The lower limit of the product of ΔEB × Tt is preferably 8 or more, more preferably 10 or more, still more preferably 12 or more. When the product of ΔEB × Tt is within the range indicated above, the advantageous effect tends to be better achieved.

In the tire, the thickness Tt (mm) of the tire component is preferably 10.0 mm or less, more preferably 5.0 mm or less, still more preferably 4.0 mm or less, particularly preferably 3.5 mm or less. The lower limit of the thickness Tt of the tire component is preferably 0.5 mm or more, more preferably 1.0 mm or more, still more preferably 1.5 mm or more, further preferably 3.0 mm or more. When the thickness Tt is within the range indicated above, the advantageous effect tends to be suitably achieved.

Herein, the thickness Tt of the tire component refers to the largest thickness of each tire component (sidewall or the like). The thickness at a point on the surface of each tire component is a straight line length measured at the point along the normal of the surface of the tire component. The thickness Tt of the tire component is the maximum value of the thickness at the point.

The tire desirably has a ratio (Cc/Tt) of the amount Cc (parts by mass) of carbon black per 100 parts by mass of the rubber component in the rubber composition to the thickness Tt (mm) of the tire component of higher than 15.0.

The ratio Cc/Tt is preferably 15.7 or higher, more preferably 16.5 or higher, still more preferably 17.1 or higher. The upper limit of the ratio Cc/Tt is preferably 20.0 or lower, more preferably 19.0 or lower, still more preferably 18.5 or lower, further preferably 18.3 or lower. When the ratio Cc/Tt is within the range indicated above, the advantageous effect tends to be better achieved.

The mechanism of the enhancement of the advantageous effect provided by the ratio Cc/Tt of higher than 15.0 is not clear. Presumably, in this case, the tire component may be reinforced entirely along the thickness direction by carbon black, whereby a decrease in handling stability can be reduced. Thus, presumably, handling stability after degradation may improve.

The tire desirably has a ratio (Pc/Tt) of the amount Pc (parts by mass) of the plasticizer per 100 parts by mass of the rubber component in the rubber composition to the thickness Tt (mm) of the tire component of lower than 3.6.

The ratio Pc/Tt is preferably 3.3 or lower, more preferably 3.0 or lower, still more preferably 2.9 or lower. The lower limit of the ratio Pc/Tt is preferably 1.5 or higher, more preferably 2.0 or higher, still more preferably 2.2 or higher. When the ratio (Pc/Tt) is within the range indicated above, the advantageous effect tends to be better achieved.

The mechanism of the enhancement of the advantageous effect provided by the ratio Pc/Tt of lower than 3.6 is not clear. Presumably, in this case, the amount of the plasticizer is small relative to the thickness of the tire component. This may lead to prevention of loss of the plasticizer caused by degradation and further lead to reduction of a change in rigidity caused by such a loss, whereby a decrease in handling stability can be reduced. Thus, presumably, handling stability after degradation may improve.

In the tire, the groove depth D (mm) of a circumferential groove on a tread is preferably 5.5 mm or more, more preferably 6.0 mm or more, still more preferably 6.5 mm or more, further preferably 6.7 mm or more, further preferably 6.8 mm or more, further preferably 6.9 mm or more, further preferably 7.0 mm or more, further preferably 7.1 mm or more, further preferably 7.2 mm or more, while it is preferably 9.5 mm or less, more preferably 9.0 mm or less, still more preferably 8.5 mm or less. When the groove depth D is within the range indicated above, the advantageous effect tends to be better achieved.

Herein, the groove depth D of a circumferential groove is measured along the normal of a face that is extended from the ground contact face corresponding to the outermost surface of the tread and refers to a distance from the face extended from the ground contact face to the deepest part of the bottom of the groove. The groove depth D is the largest distance among the groove depths of existing circumferential grooves.

The tire desirably has a ratio (ΔEB/D) of the rate of change ΔEB (%) in elongation at break of the rubber composition between before and after heat aging to the groove depth D (mm) of a circumferential groove on the tread of 0.6 or higher and 1.5 or lower.

The ratio ΔEB/D is preferably 0.7 or higher, more preferably 0.8 or higher, still more preferably 0.9 or higher. The upper limit of the ratio ΔEB/D is preferably 1.3 or lower, more preferably 1.2 or lower, still more preferably 1.1 or lower, further preferably 1.0 or lower. When the ratio ΔEB/D is within the range indicated above, the advantageous effect tends to be better achieved.

The mechanism of the enhancement of the advantageous effect provided by controlling the ratio ΔEB/D to be within a predetermined range is not clear. Presumably, a predetermined level of handling stability may be reliably obtained and simultaneously a decrease in handling stability caused by degradation of the rubber can be reduced by controlling the rate of change ΔEB in elongation at break between before and after heat aging to be a predetermined rate or lower and also

controlling the groove depth. Thus, presumably, handling stability after degradation may improve.

Herein, the dimensions such as thickness are measured while the width between the bead portions of the tire is fixed to the normal rim width. In the measurement of each dimension, a sample is cut from the tire in the tire radial direction, and the width between the bead edges on both sides of the sample is fixed to the normal rim width.

Herein, the dimensions of the parts of the tire are measured for the tire in the normal state, unless otherwise stated. Herein, the term "normal state" refers to a state where the tire is mounted on a normal rim, inflated to a normal internal pressure, and under no load. The term "normal rim" refers to a rim specified for each tire by the standard in a standard system including standards according to which the tire is provided, and may be, for example, "standard rim" with the applicable size listed in "JATMA YEAR BOOK" of The Japan Automobile Tyre Manufacturers Association, Inc. (JATMA), "measuring rim" listed in "Standards Manual" of The European Tyre and Rim Technical Organisation (ETRTO), or "design rim" listed in "YEAR BOOK" of The Tire and Rim Association, Inc. (TRA). Here, JATMA, ETRTO, and TRA will be referenced in that order, and if the referenced standard includes the applicable size, such a referenced standard will be followed. For a tire which is not defined by any of the standards, the normal rim refers to a rim with the smallest diameter and, secondly, the narrowest width among the rims on which the tire can be mounted and can maintain the internal pressure, i.e., the rims that cause no air leakage between the rim and the tire. The term "normal internal pressure" refers to an air pressure specified for each tire by the standard in a standard system including standards according to which the tire is provided, and may be "maximum air pressure" in JATMA, "inflation pressure" in ETRTO, or the maximum value shown in Table "TIRE LOAD LIMITS AT VARIOUS COLD INFLATION PRESSURES" in TRA. JATMA, ETRTO, and TRA will be referenced in that order, and if the referenced standard includes the applicable size, such a referenced standard will be followed. Moreover, for a tire which is not defined by any of the standards, the normal internal pressure refers to a normal internal pressure of 250 kPa or more for another tire size defined by any of the standards, for which the normal rim is listed as the standard rim. Here, when a plurality of normal internal pressures of 250 kPa or more are listed, the normal internal pressure refers to the smallest one of these normal internal pressures.

An exemplary embodiment of the tire is described below with reference to drawings. The present invention is not limited to the embodiment.

FIG. 1 shows a pneumatic tire 2. In FIG. 1, the vertical direction corresponds to the radial direction of the tire 2, the horizontal direction corresponds to the axial direction of the tire 2, and the direction perpendicular to the paper corresponds to the circumferential direction of the tire 2. In FIG. 1, the dash-dot-dash line CL represents the equator of the tire 2. The shape of the tire 2 is symmetrical to the equator, except for the tread pattern.

The tire 2 includes a tread 4, a pair of sidewalls 6, a pair of wings 8, a pair of clinches 10, a pair of beads 12, a carcass 14, a belt 16, a band 18, an innerliner 20, and a pair of chafers 22. The tire 2 is a tubeless tire. The tire 2 will be mounted on a passenger vehicle.

The tread 4 has a radially outwardly convex shape. The tread 4 forms a tread face 24 that will contact the road surface. The tread 4 has grooves 26 engraved thereon. The grooves 26 define a tread pattern. The tread 4 has a base layer 28 and a cap layer 30. The cap layer 30 is located radially outward of the base layer 28. The cap layer 30 is stacked on the base layer 28.

Although FIG. 1 shows an example of the two-layer tread 4 including the cap layer 30 and the base layer 28, the tread 4 may be a monolayer tread or a three or more-layer tread.

In the tire 2 in FIG. 1, each sidewall 6 extends substantially inwardly in the radial direction from an end of the tread 4. The radially outer portion of the sidewall 6 is bonded to the tread 4. The radially inner portion of the sidewall 6 is bonded to a clinch 10.

In the tire 2 in FIG. 1, each sidewall 6 includes the rubber composition. Each sidewall 6 has a rate of change $\Delta EB$ in elongation at break between before and after heat aging of 8.0% or lower. The tire has a product ($\Delta EB \times Tt$) of the $\Delta EB$ (%) and the thickness Tt (mm) of each sidewall of less than 30.

In the tire 2 in FIG. 1, the thickness Tt of each sidewall 6 is the largest one of the thicknesses of the sidewall at points on the surface of the sidewall 6. The thickness is denoted by Tt in the example in FIG. 1.

In the tire 2 in FIG. 1, each wing 8 is located between the tread 4 and the sidewall 6. The wing 8 is bonded to both the tread 4 and the sidewall 6.

Each clinch 10 is located substantially radially inward of the sidewall 6. The clinch 10 is located axially outwardly from a bead 12 and the carcass 14.

Each bead 12 is located axially inward of the clinch 10. Each bead 12 includes a core 32 and an apex 34 that radially outwardly extends from the core 32. The core 32 has a ring shape and contains a wound non-stretchable wire, etc. The apex 34 is radially outwardly tapered.

The carcass 14 includes a carcass ply 36. Although the carcass 14 in the tire 2 includes one carcass ply 36, it may include two or more carcass plies.

In the tire 2, the carcass ply 36 extends between the beads 12 on opposite sides along the tread 4 and the sidewalls 6. The carcass ply 36 is folded around each bead 12 from the inside to the outside in the axial direction. Due to the folding, the carcass ply 36 is provided with a main portion 36a and a pair of folded portions 36b. Namely, the carcass ply 36

includes the main portion 36a and a pair of the folded portions 36b.

Though not shown, examples of the carcass ply 36 include carcass plies which include a large number of parallel cords and a topping rubber. The carcass 14 preferably has a radial structure.

A belt 16 is located radially inward of the tread 4. The belt 16 is stacked on the carcass 14. The belt 16 includes an interior layer 38 and an exterior layer 40.

Though not shown, examples of the interior layer 38 and the exterior layer 40 each include layers which include a large number of parallel cords and a topping rubber. Each cord is tilted relative to the equator, for example. The tilt direction of the cords in the interior layer 38 relative to the equator is opposite to the tilt direction of the cords in the exterior layer 40 relative to the equator.

A band 18 is located radially outward of the belt 16. The band 18 has a width that is equal to or nearly equal to the width of the belt 16 in the axial direction. The band 18 may be wider than the belt 16.

Though not shown, examples of the band 18 include bands which include cords and a topping rubber. The cords are spirally wound, for example.

The belt 16 and the band 18 form a reinforcement layer. The reinforcement layer may be formed only of the belt 16.

An innerliner 20 is located inward of the carcass 14. The innerliner 20 is bonded to the inner surface of the carcass 14.

Each chafer 22 is located near the bead 12. In this embodiment, examples of the chafer 22 include chafers which include a rubber and a fabric impregnated with the rubber. The chafer 22 may be integrated with the clinch 10.

FIG. 2 illustrates an enlarged cross-sectional view showing the tread 4 and its vicinity in the tire 2 in FIG. 1. In FIG.2, the vertical direction corresponds to the radial direction of the tire 2, the horizontal direction corresponds to the axial direction of the tire 2, and the direction perpendicular to the drawing plane corresponds to the circumferential direction of the tire 2.

In the tire 2, the tread 4 has main grooves 42 as the grooves 26. As shown in FIG. 1, the tread 4 has a plurality of, specifically three, main grooves 42 engraved thereon. The main grooves 42 are spaced apart in the axis direction. Four ribs 44 extending in the circumferential direction are defined by the three main grooves 42 engraved on the tread 4. In other words, each main groove 42 is between one rib 44 and another rib 44.

The main grooves 42 extend in the circumferential direction. The main grooves 42 are continuous in the circumferential direction without interruption. The main grooves 42 promote draining of water present between the road surface and the tire 2, for example, in rainy weather. Thus, the tire 2 can sufficiently contact the road surface even when the road surface is wet.

In FIG. 2, D represents the groove depth of the main circumferential groove 42 on the tread 4.

In the tire 2, the rate of change ΔEB (%) in elongation at break of each sidewall 6 between before and after heat aging, the amount Cc (parts by mass) of carbon black per 100 parts by mass of the rubber component, the amount Pc (parts by mass) of the plasticizer per 100 parts by mass of the rubber component, the plasticizer content Pr (% by mass), the thickness Tt (mm) of each sidewall 6, and the groove depth D (mm) of a circumferential groove on the tread desirably give the ratio Cc/ΔEB, the product of Pc × ΔEB, the Pr, the ratio Cc/Tt, the ratio Pc/Tt, the ratio ΔEB/D, the Tt, and the D within the respective ranges indicated above.

EXAMPLES

Examples (working examples) which are considered preferable to implement the present invention are described below although the scope of the disclosure is not limited to the examples.

Chemicals used in the synthesis and polymerization are listed below. If necessary, the chemicals are purified by usual techniques.

n-Hexane: a product of Kanto Chemical Co., Inc.
Styrene: a product of Kanto Chemical Co., Inc.
Butadiene: 1,3-butadiene available from Tokyo Chemical Industry Co., Ltd.
TMEDA: N,N,N',N'-tetramethylethylenediamine available from Kanto Chemical Co., Inc.
n-Butyllithium solution: 1.6 M solution of n-butyllithium in hexane available from Kanto Chemical Co., Inc.

The methods for evaluating the copolymers are collectively described below.

(Measurement of degree of hydrogenation of conjugated diene portion of copolymer)

A solution having a concentration of 15% by mass is prepared using carbon tetrachloride as a solvent and is used to measure a $^1$H-NMR spectrum at 100 MHz. The degree of hydrogenation is calculated from the rate of decrease in

unsaturated bond signals in the $^1$H-NMR spectrum.

(Measurement of styrene content)

A $^1$H-NMR spectrum is measured using a JEOL JNM-A 400 NMR spectrometer at 25°C. A ratio of the phenyl protons of the styrene unit at 6.5 to 7.2 ppm to the vinyl protons of the butadiene unit at 4.9 to 5.4 ppm is determined from the spectrum and used to determine the styrene content.

(Measurement of weight average molecular weight (Mw))

The weight average molecular weight (Mw) of the copolymer is determined by gel permeation chromatography (GPC) (GPC-8000 series available from Tosoh Corporation, detector: differential refractometer, column: TSKgel Super-Multipore HZ-M available from Tosoh Corporation) and the determined value is calibrated with polystyrene standards.

(Production Example 1: Synthesis of hydrogenated styrene-butadiene copolymer, degree of hydrogenation 95 mol%)

A sufficiently nitrogen-purged heat-resistant reaction vessel is charged with 2000 mL of n-hexane, 60 g of styrene, 140 g of butadiene, 0.93 g of TMEDA, and 0.45 mmol of n-butyllithium, followed by stirring at 50°C for 5 hours to perform a polymerization reaction. Subsequently, the reaction solution is stirred for 20 minutes while supplying hydrogen gas at a pressure of 0.4 MPa gauge to react unreacted polymer terminal lithium with hydrogen into lithium hydride. Hydrogenation is performed using a titanocene dichloride-based catalyst at a hydrogen gas supply pressure of 0.7 MPa gauge and a reaction temperature of 90°C. Once the cumulative amount of absorbed hydrogen reaches the amount corresponding to the target degree of hydrogenation, the reaction temperature is brought to room temperature, and the hydrogen pressure is returned to an ordinary pressure. Then, the reaction solution is drawn from the reaction vessel and introduced into water with stirring. Next, the solvent is removed by steam stripping to obtain a hydrogenated styrene-butadiene copolymer.

The hydrogenated styrene-butadiene copolymer has a degree of hydrogenation of 95 mol%, a weight average molecular weight of 450000, a styrene content of 30% by mass, and a butadiene content of 70% by mass.

Chemicals used in tire production are listed below. If necessary, the chemicals are purified by usual techniques.

NR: TSR20
SBR: SBR produced in the Production Example 1
BR: BR1280 available from LG Chem
Carbon black: SHOBLACK N550 ($N_2SA$: 42 $m^2/g$) available from Cabot Japan K.K.

Recycled carbon black: recycled carbon black ($N_2SA$: 45 $m^2/g$) produced by a known pyrolysis method (a method involving pyrolysis of a waste tire through heating at 650°C or higher)

Oil: vivatec 400/500 (TDAE oil) available from H&R
Plant oil: soybean oil available from FUJIFILM Wako Pure Chemical Corporation
Resin: Petrotac 100V (C5/C9 resin, softening point: 94°C, Mw: 3900, Mn: 1200) available from Tosoh Corporation
Polyoctenamer: Vestenamer 8012 (Mw: 90000) available from Evonik
Thermoplastic elastomer: Nipolon Hard 2500 available from Tosoh Corporation
Wax: Sunnoc wax available from Ouchi Shinko Chemical Industrial Co., Ltd.
Antioxidant 1: NOCCRAC 6C (N-(1,3-dimethylbutyl)-N'-phenyl-p-phenylenediamine) available from Ouchi Shinko Chemical Industrial Co., Ltd.
Antioxidant 2: NOCCRAC 224 (2,2,4-trimethyl-1,2-dihydroquinoline polymer) available from Ouchi Shinko Chemical Industrial Co., Ltd.
Stearic acid: stearic acid "TSUBAKI" available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS (N-tert-butyl-2-benzothiazylsulfenamide) available from Ouchi Shinko Chemical Industrial Co., Ltd.

<Production of test tire>

According to the formulation in Table 1, the materials other than the sulfur and the vulcanization accelerator are kneaded in a 1.7 L Banbury mixer (Kobe Steel, Ltd.) at 150°C for five minutes to obtain a kneaded mixture.

The sulfur and the vulcanization accelerator are added to the kneaded mixture, and they are kneaded using an open roll mill at 80°C for five minutes to obtain an unvulcanized rubber composition.

The unvulcanized rubber composition is formed into the shape of a sidewall and is then assembled with other tire components on a tire building machine to build an unvulcanized tire. The unvulcanized tire is vulcanized at 170°C for 10 minutes, whereby a test tire (size 205/70R15, a passenger car tire) is produced.

Test tires prepared according to the amounts and the specifications varied as shown in Table 1 are simulated. Table 1 shows the results calculated as described in the evaluation methods below.

The reference comparative example is as follows.

Table 1: Comparative Example 2

(Heat aging)

The test tire (new) is heat-aged at 80°C for one week in accordance with JIS K 6257:2010 "Rubber, vulcanized or thermoplastic - Determination of heat ageing properties" to prepare a heat-aged tire.

<Elongation at break EB before heat aging and after heat aging>

No. 6 dumbbell-shaped test specimens are prepared from a new sample (vulcanized rubber composition) collected from a sidewall of the new tire and a heat-aged sample (vulcanized rubber composition) collected from the sidewall of the tire after heat aging in accordance with JIS K 6251:2010. The test specimens are subjected to a tensile test at 25°C to measure the elongation at break EBf (%) of the new sample (before heat aging) and the elongation at break EBa (%) of the heat-aged sample. A rate of change ΔEB (%) in elongation at break between before and after heat aging is calculated using the following equation: $\Delta EB\ (\%) = (|EBf - EBa|)/EBf \times 100$.

<Handling stability after degradation>

A set of the heat-aged tires is mounted on a vehicle. A test driver drives the vehicle in a test course and subjectively evaluates the control stability during driving on a 5-point scale (point 5 is the highest). Total 20 test drivers conduct the evaluation. The sum of the evaluation points is expressed as an index relative to the evaluation reference taken as 100. A higher index indicates better control stability and better handling stability after degradation.

[Table 1]

| | | Example | | | | | | | | | | | | | | | Comparative Example | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 |
| Formulation (parts by mass) | NR | 40 | 40 | 40 | 40 | 40 | 40 | 40 | 40 | 40 | 40 | 40 | 5 | 40 | 40 | 40 | 40 | 40 | 40 |
| | SBR | 20 | 20 | 20 | 20 | 20 | 20 | 20 | 20 | 20 | 20 | 20 | 90 | 20 | 20 | 20 | 20 | 20 | 20 |
| | BR | 40 | 40 | 40 | 40 | 40 | 40 | 40 | 40 | 40 | 40 | 40 | 5 | 40 | 40 | 40 | 40 | 40 | 40 |
| | Carbon black | | | | | | | | | | 55 | | | | | | | | |
| | Recycled carbon black | 55 | 60 | 50 | 55 | 60 | 60 | 50 | 60 | 55 | | 55 | 55 | 55 | 55 | 55 | 55 | 55 | 55 |
| | Oil | | | | | | | | | | | 10 | | | | | | | |
| | Plant oil | 10 | 10 | 7 | 10 | 7 | 10 | 7 | 7 | 10 | 10 | | 10 | 10 | 10 | 10 | 10 | 10 | 10 |
| | Resin | 3 | 3 | 3 | 3 | 3 | 3 | 3 | 3 | 3 | 3 | 3 | 3 | 3 | 3 | 3 | 3 | 3 | 3 |
| | Polyoctenamer | 10 | 10 | 10 | 10 | 10 | 10 | 10 | 10 | 10 | 10 | 10 | 10 | | 10 | 10 | | 10 | |
| | Thermoplastic elastomer | | | | 5 | | 5 | 5 | 5 | | | | | | | | | | |
| | Wax | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| | Antioxidant 1 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Antioxidant 2 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Stearic acid | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Zinc oxide | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | Sulfur | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 |
| | Vulcanization accelerator | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| Elongation at break EBf (%) before heat aging | | 650 | 611 | 656 | 612 | 589 | 581 | 623 | 581 | 650 | 644 | 647 | 730 | 560 | 650 | 650 | 560 | 650 | 560 |
| Elongation at break EBa (%) after heat aging | | 598 | 567 | 610 | 567 | 558 | 544 | 581 | 544 | 598 | 592 | 595 | 672 | 515 | 598 | 598 | 504 | 598 | 493 |
| Rate of change ΔEB (%) in elongation at break between before and after heat aging | | 8.0 | 7.3 | 7.0 | 7.3 | 5.2 | 6.3 | 6.8 | 6.4 | 8.0 | 8.0 | 8.0 | 8.0 | 8.0 | 8.0 | 8.0 | 10.0 | 8.0 | 12.0 |
| Thickness Tt (mm) of sidewall | | 3.5 | 3.5 | 3.5 | 3.5 | 3.5 | 3.5 | 3.5 | 3.5 | 3.0 | 3.5 | 3.5 | 3.5 | 3.5 | 3.5 | 3.5 | 3.5 | 4.0 | 2.5 |
| ΔEB × Tt | | 28 | 26 | 25 | 26 | 18 | 22 | 24 | 22 | 24 | 28 | 28 | 28 | 28 | 28 | 28 | 35 | 32 | 30 |
| Amount Cc (parts by mass) of carbon black | | 55 | 60 | 50 | 55 | 60 | 60 | 50 | 60 | 55 | 55 | 55 | 55 | 55 | 55 | 55 | 55 | 55 | 55 |
| Cc/ΔEB | | 6.9 | 8.2 | 7.1 | 7.5 | 11.5 | 9.5 | 7.4 | 9.4 | 6.9 | 6.9 | 6.9 | 6.9 | 6.9 | 6.9 | 6.9 | 5.5 | 6.9 | 4.6 |
| Amount Pc (parts by mass) of plasticizer | | 13.0 | 13.0 | 10.0 | 13.0 | 10.0 | 13.0 | 10.0 | 10.0 | 13.0 | 13.0 | 13.0 | 13.0 | 13.0 | 13.0 | 13.0 | 13.0 | 13.0 | 13.0 |
| Pc × ΔEB | | 104 | 95 | 70 | 95 | 52 | 82 | 68 | 64 | 104 | 104 | 104 | 104 | 104 | 104 | 104 | 130 | 104 | 156 |
| Plasticizer content Pr (% by mass) | | 6.8 | 6.6 | 5.5 | 6.6 | 5.2 | 6.5 | 5.3 | 5.1 | 6.8 | 6.8 | 6.8 | 6.8 | 7.2 | 6.8 | 6.8 | 7.2 | 6.8 | 7.2 |
| Cc/Tt | | 15.7 | 17.1 | 14.3 | 15.7 | 17.1 | 17.1 | 14.3 | 17.1 | 18.3 | 15.7 | 15.7 | 15.7 | 15.7 | 15.7 | 15.7 | 15.7 | 13.8 | 22.0 |
| Pc/Tt | | 3.7 | 3.7 | 2.9 | 3.7 | 2.9 | 3.7 | 2.9 | 2.9 | 4.3 | 3.7 | 3.7 | 3.7 | 3.7 | 3.7 | 3.7 | 3.7 | 3.3 | 5.2 |
| Groove depth D (mm) of circumferential groove | | 6.9 | 7.0 | 7.0 | 6.8 | 7.1 | 6.8 | 6.7 | 7.0 | 7.1 | 7.2 | 6.9 | 7.0 | 7.0 | 9.8 | 15.0 | 6.9 | 6.8 | 7.2 |
| ΔEB/D | | 1.2 | 1.0 | 1.0 | 1.1 | 0.7 | 0.9 | 1.0 | 0.9 | 1.1 | 1.1 | 1.2 | 1.1 | 1.1 | 0.8 | 0.5 | 1.4 | 1.2 | 1.7 |
| Evaluation | Handling stability after degradation | 120 | 124 | 126 | 124 | 135 | 131 | 130 | 140 | 124 | 104 | 107 | 105 | 105 | 104 | 103 | 90 | 100 | 95 |

Exemplary embodiments of the present invention include the following.

Embodiment 1. A tire, including a tire component that includes a rubber composition,

the rubber composition having a rate of change ΔEB in elongation at break between before and after heat aging of 8.0% or lower,

the tire having a product (ΔEB × Tt) of the ΔEB (%) and a thickness Tt (mm) of the tire component of less than 30.

Embodiment 2. The tire according to the embodiment 1, wherein the rubber composition contains recycled carbon black.

Embodiment 3. The tire according to the embodiment 1 or 2, wherein the rubber composition has a ratio (Cc/ΔEB) of an amount Cc (parts by mass) of carbon black per 100 parts by mass of a rubber component therein to the rate of change ΔEB (%) in elongation at break between before and after heat aging of higher than 7.6.

Embodiment 4. The tire according to any combination with any one of the embodiments 1 to 3, wherein the rubber composition contains a plant oil.

Embodiment 5. The tire according to any combination with any one of the embodiments 1 to 4, wherein the rubber composition has a product (Pc × ΔEB) of an amount Pc (parts by mass) of a plasticizer per 100 parts by mass of the rubber component and the rate of change ΔEB (%) in elongation at break between before and after heat aging of less than 80.

Embodiment 6. The tire according to any combination with any one of the embodiments 1 to 5, wherein the rubber composition contains at least one selected from the group consisting of an isoprene-based rubber, polybutadiene rubber, and styrene-butadiene rubber.

Embodiment 7. The tire according to any combination with any one of the embodiments 1 to 6, wherein the rubber composition contains the styrene-butadiene rubber in an amount of less than 80% by mass based on 100% by mass of the rubber component.

Embodiment 8. The tire according to any combination with any one of the embodiments 1 to 7, wherein the rubber composition contains a double bond-containing polymer that is liquid at 25°C.

Embodiment 9. The tire according to any combination with any one of the embodiments 1 to 8, wherein the rubber composition contains a thermoplastic elastomer.

Embodiment 10. The tire according to any combination with any one of the embodiments 1 to 9, wherein the rubber composition has a plasticizer content Pr (% by mass) of 6.5% by mass or lower.

Embodiment 11. The tire according to any combination with any one of the embodiments 1 to 10, wherein the tire has a ratio (Cc/Tt) of the amount Cc (parts by mass) of carbon black per 100 parts by mass of the rubber component in the rubber composition to the thickness Tt (mm) of the tire component of higher than 15.0.

Embodiment 12. The tire according to any combination with any one of the embodiments 1 to 11, wherein the tire has a ratio (Pc/Tt) of the amount Pc (parts by mass) of the plasticizer per 100 parts by mass of the rubber component in the rubber composition to the thickness Tt (mm) of the tire component of lower than 3.6.

Embodiment 13. The tire according to any combination with any one of the embodiments 1 to 12, wherein a tread has a circumferential groove with a groove depth D of 5.5 mm or more and 9.5 mm or less.

Embodiment 14. The tire according to any combination with any one of the embodiments 1 to 13, wherein the tire has a ratio ($\Delta$EB/D) of the rate of change $\Delta$EB (%) in elongation at break of the rubber composition between before and after heat aging to the groove depth D (mm) of the circumferential groove on the tread of 0.6 or higher and 1.5 or lower.

Embodiment 15. The tire according to any combination with any one of the embodiments 1 to 14, wherein the tire component is a tire inner component.

REFERENCE SIGNS LIST

2 pneumatic tire
4 tread
6 sidewall
8 wing
10 clinch
12 bead
14 carcass
16 belt
18 band
20 innerliner
22 chafer
24 tread face
26 groove
28 base layer
30 cap layer
32 core
34 apex
36 carcass ply
36a main portion
36b folded portion
38 interior layer
40 exterior layer
42 main groove
44 rib
CL tire equator
Tt thickness of sidewall
D groove depth of main circumferential groove

**Claims**

1. A tire, comprising a tire component that includes a rubber composition,

   the rubber composition having a rate of change $\Delta$EB in elongation at break between before and after heat aging of 8.0% or lower,
   the tire having a product ($\Delta EB \times Tt$) of the $\Delta$EB (%) and a thickness Tt (mm) of the tire component of less than 30.

2. The tire according to claim 1, wherein the rubber composition contains recycled carbon black.

3. The tire according to claim 1 or 2, wherein the rubber composition has a ratio (Cc/ΔEB) of an amount Cc (parts by mass) of carbon black per 100 parts by mass of a rubber component therein to the rate of change ΔEB (%) in elongation at break between before and after heat aging of higher than 7.6.

4. The tire according to any one of claims 1 to 3, wherein the rubber composition contains a plant oil.

5. The tire according to any one of claims 1 to 4, wherein the rubber composition has a product (Pc × ΔEB) of an amount Pc (parts by mass) of a plasticizer per 100 parts by mass of the rubber component and the rate of change ΔEB (%) in elongation at break between before and after heat aging of less than 80.

6. The tire according to any one of claims 1 to 5, wherein the rubber composition contains at least one selected from the group consisting of an isoprene-based rubber, polybutadiene rubber, and styrene-butadiene rubber.

7. The tire according to any one of claims 1 to 6, wherein the rubber composition contains the styrene-butadiene rubber in an amount of less than 80% by mass based on 100% by mass of the rubber component.

8. The tire according to any one of claims 1 to 7, wherein the rubber composition contains a double bond-containing polymer that is liquid at 25°C.

9. The tire according to any one of claims 1 to 8, wherein the rubber composition contains a thermoplastic elastomer.

10. The tire according to any one of claims 1 to 9, wherein the rubber composition has a plasticizer content Pr (% by mass) of 6.5% by mass or lower.

11. The tire according to any one of claims 1 to 10, wherein the tire has a ratio (Cc/Tt) of the amount Cc (parts by mass) of carbon black per 100 parts by mass of the rubber component in the rubber composition to the thickness Tt (mm) of the tire component of higher than 15.0.

12. The tire according to any one of claims 1 to 11, wherein the tire has a ratio (Pc/Tt) of the amount Pc (parts by mass) of the plasticizer per 100 parts by mass of the rubber component in the rubber composition to the thickness Tt (mm) of the tire component of lower than 3.6.

13. The tire according to any one of claims 1 to 12, wherein a tread has a circumferential groove with a groove depth D of 5.5 mm or more and 9.5 mm or less.

14. The tire according to any one of claims 1 to 13, wherein the tire has a ratio (ΔEB/D) of the rate of change ΔEB (%) in elongation at break of the rubber composition between before and after heat aging to the groove depth D (mm) of the circumferential groove on the tread of 0.6 or higher and 1.5 or lower.

15. The tire according to any one of claims 1 to 14, wherein the tire component is a tire inner component.

FIG.1

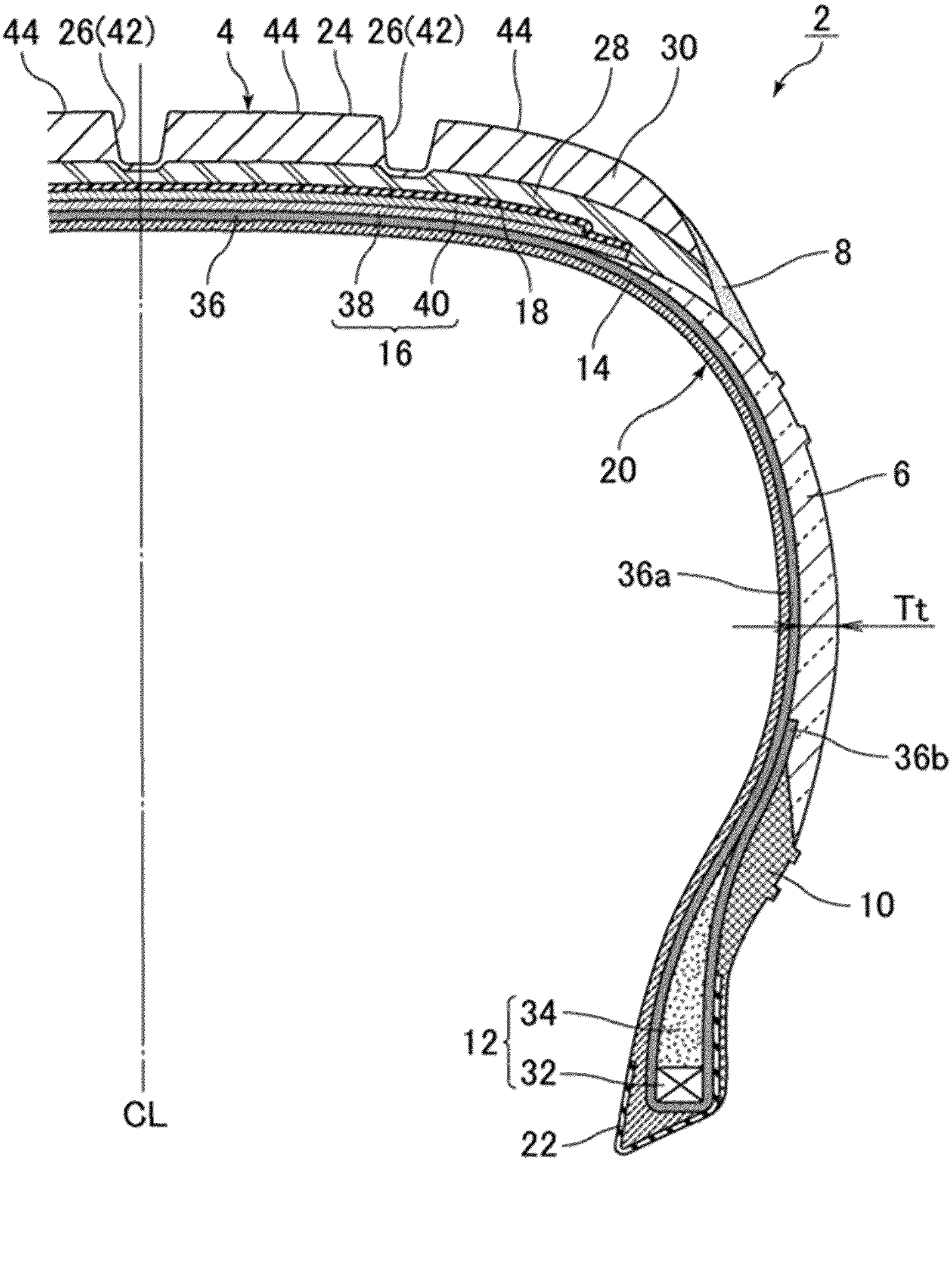
44
26(42)
4
44
24
26(42)
44
28
30
2
8
36
38
40
16
18
14
20
6
36a
Tt
36b
10
12
34
32
22
CL

FIG.2

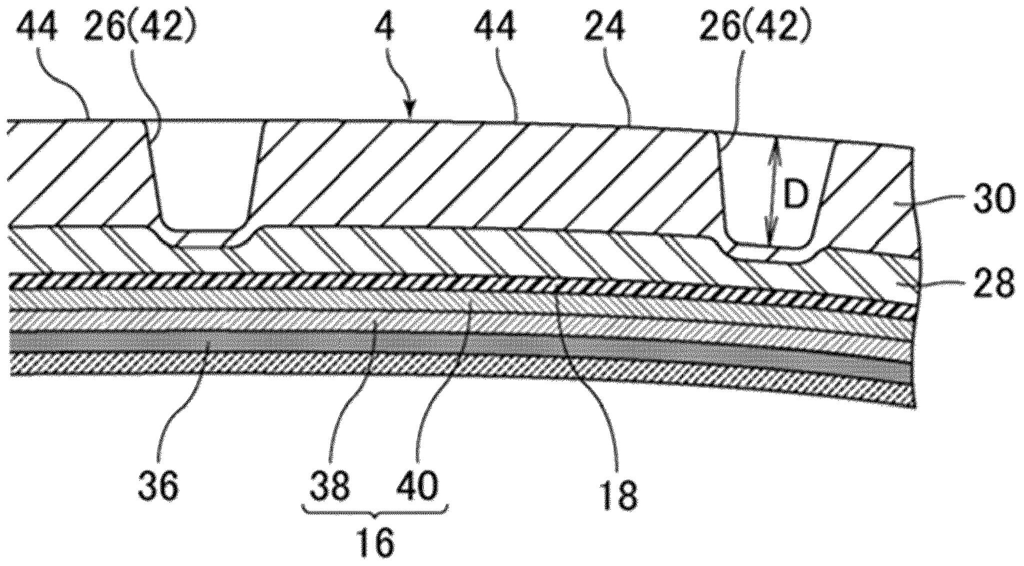

Europäisches Patentamt
European Patent Office
Office européen des brevets

# EUROPEAN SEARCH REPORT

Application Number
EP 24 21 2259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 763 783 A1 (SUMITOMO RUBBER IND [JP]) 13 January 2021 (2021-01-13) * paragraph [0018]; claim 1; example 1 * | 1-15 | INV. B60C1/00 C08C19/02 C08L7/00 C08L9/00 |
| A | EP 3 882 047 A1 (SUMITOMO RUBBER IND [JP]) 22 September 2021 (2021-09-22) * paragraph [0005]; claims 1,5; example 1 * | 1-15 | |
| A | EP 2 896 633 A1 (SUMITOMO RUBBER IND [JP]) 22 July 2015 (2015-07-22) * claim 1 * | 1-15 | |

TECHNICAL FIELDS SEARCHED (IPC)

B60C
C08C
C08L

The present search report has been drawn up for all claims

1

| Place of search | Date of completion of the search | Examiner |
|---|---|---|
| Munich | 30 April 2025 | Höfler, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 2259

This annex lists the patent family members relating to the patent documents cited in the above-mentioned European search report. The members are as contained in the European Patent Office EDP file on
The European Patent Office is in no way liable for these particulars which are merely given for the purpose of information.

30-04-2025

| Patent document cited in search report | Publication date | Patent family member(s) | Publication date |
|---|---|---|---|
| EP 3763783 A1 | 13-01-2021 | CN 112055729 A | 08-12-2020 |
| | | EP 3763783 A1 | 13-01-2021 |
| | | JP 7298643 B2 | 27-06-2023 |
| | | JP 2020079336 A | 28-05-2020 |
| | | JP 2021119229 A | 12-08-2021 |
| | | US 2022017729 A1 | 20-01-2022 |
| | | WO 2020100492 A1 | 22-05-2020 |
| EP 3882047 A1 | 22-09-2021 | CN 112912258 A | 04-06-2021 |
| | | EP 3882047 A1 | 22-09-2021 |
| | | JP 7224150 B2 | 17-02-2023 |
| | | JP 2020079340 A | 28-05-2020 |
| | | US 2022119626 A1 | 21-04-2022 |
| | | WO 2020100495 A1 | 22-05-2020 |
| EP 2896633 A1 | 22-07-2015 | BR 112015018474 A2 | 18-07-2017 |
| | | CN 104854136 A | 19-08-2015 |
| | | EP 2896633 A1 | 22-07-2015 |
| | | JP 5667327 B1 | 12-02-2015 |
| | | JP WO2014125700 A1 | 02-02-2017 |
| | | US 2015291765 A1 | 15-10-2015 |
| | | WO 2014125700 A1 | 21-08-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2016039005 A
- JP 2009002594 A

### Non-patent literature cited in the description

- *Akita Prefectural University Web Journal B*, 2019, vol. 6, 216-222